# EUROPEAN PATENT SPECIFICATION

(11) **EP 1 851 035 B1**
(45) Date of publication and mention of the grant of the patent: **18.11.2009**
(21) Application number: 06708404.6
(22) Date of filing: 21.02.2006
(51) Int. Cl.: B29C 59/04, B29C 33/04

(54) **ROLL COMPRISING A LAYER OF FLEXIBLE SYNTHETIC MATERIAL**
ROLLE MIT EINER SCHICHT AUS FLEXIBLEM SYNTHETISCHEM MATERIAL
ROULEAU COMPORTANT UNE COUCHE DE MATÉRIAU SYNTHÉTIQUE SOUPLE

(30) Priority: 22.02.2005 FR 0501796
(43) Date of publication of application: 07.11.2007
(73) Proprietor: Renolit AG, 67547 Worms (DE)
(72) Inventor: GERARD, Yannick, B-1950 Kraainem (BE); POTY, André, B-1428 Lillois-witterzee (BE)
(74) Representative: Wagner, Jutta
(86) International application number: PCT/EP2006/060123
(87) International publication number: WO 2006/089883

(56) References cited:
- EP-A- 0 165 750
- DE-A1- 10 251 121
- US-A- 4 110 152

## Description

The invention relates to a roll comprising a layer of flexible synthetic material. It relates more particularly to such a roll suitable for processing plastics.

When processing films made of plastic, in particular thin films having a thickness less than 500 µm, it is often necessary to apply a high pressure to the film in order to keep it flat. Conventionally, this pressure is applied by passing the film between at least two rolls applied against each other. In order to improve the pressing effect, it is known to press the plastic between rolls, at least one of which possesses a surface made of deformable flexible synthetic material such as rubber, covering a metal core, so as to obtain a greater area of contact between the rolls when these are pressed against each other.

However, under the effect of heating and wear, the diameters profile of rolls possessing a synthetic surface rapidly deteriorates, which involves replacing or remachining them. The diameters profile is understood to mean the succession of external diameters of the roll when moving along its axis.

In EP 0 763 667, it is proposed to cover the layer made of synthetic material with a thin metal layer that is also deformable. Adhesion between the various layers is ensured by the difference in the coefficient of thermal expansion between the synthetic material and the metallic materials. However, it has been observed that after a certain operational time, and in particular when production rates are high, it is very difficult to maintain simultaneously good adhesion between the synthetic layer and the outer metallic layer on the one hand and between the synthetic layer and the metallic core of the roll, on the other hand. Moreover, temperature irregularities in the synthetic material cause irregularities in the diameter profile of the roll, the hottest places increasingly compressing the thin metallic layer, which deforms. This deformation causes a deterioration in the surface finish of processed films.

EP 0165 750 A2 discloses a roll comprising an elastic layer that can be expanded outwards towards the smoothing shell by tightening nuts.

The invention aims to provide a roll comprising a layer made of flexible material that can maintain a controlled diameters profile and good mechanical performance over a long period of operation.

Consequently, the invention relates to a roll having an adjustable-diameter profile, comprising a central layer surrounded by a layer of flexible synthetic material made up of the juxtaposition of annular sections, each section surrounding a main rigid ring possessing a thickness less than that of the section, at least one thin secondary rigid ring being bonded to a main ring.

In the roll according to the invention, the length of the synthetic layer corresponds to the sum of the thickness of the sections. The sections are made of a flexible synthetic material. A synthetic material is understood to mean any material based on polymers, including by extension natural materials such as rubber having properties that are similar to some polymers. The synthetic material will be chosen so as to obtain optimum deformability under operating conditions. In general, rubbers or elastomers based on silicone give good results. It is recommended to use a synthetic material having a Shore A hardness below 80, preferably below 70. The hardness is preferably greater than 20, if possible 30, values comprised between 40 and 60 being the most preferred. On the other hand, the flexible material advantageously possesses a tensile modulus below 1, preferably 0.1 GPa. When the roll is used, all the juxtaposed sections and rings are clamped together. Since the main rigid rings have a thickness less than that of the flexible sections, in the absence of secondary rings, the sections are compressed during clamping, which increases their diameter. On the other hand, the secondary rings advantageously have a thickness corresponding to the difference in thickness between the sections and the main rings. When a secondary ring is bonded to a main ring, the main ring compensating for the difference in thickness between the section and the main ring, the corresponding section is not compressed during clamping. On the other hand, the sections surrounding the rings not provided with secondary rings, are compressed and will have the tendency to expand in the radial direction.

The rings are made of a rigid material. This is understood to mean a material that is markedly more rigid, advantageously 10 times, and preferably 100 times, more rigid than the synthetic material constituting the sections, the rigidity measurement being the modulus of elasticity expressed for example in GPa. On account of this, the rings hardly deform at all when clamped, relative to the flexible sections. They can advantageously be made of high-performance polymers, having a tensile modulus of at least 10 GPa or preferably made of metallic material. By applying extra pressure to some of the secondary rings it is therefore possible to adjust the diameters profile of a new roll or to correct the effects of wear on a damaged roll.

According to an advantageous embodiment of the roll according to the invention, the synthetic layer is covered with an outer layer made of rigid material.

The outer layer of the roll according to the invention should be made of a material that enables the wear resistance of the surface of the roll to be improved and the deformability of the synthetic intermediate layer to be transmitted. It should therefore also be able to deform easily, which imposes a maximum thickness according to the material used. This material should be a good heat conductor. Any material combining these conditions can be used, such as for example some high-performance polymers. However, it is recommended that the outer layer be made of metal, such as for example copper, steel or nickel. In this embodiment, the selective excess pressure on some secondary rings enables the pressure on the synthetic layer against the outer layer to be increased locally, which has an effect on the adhesion between these layers as well on the diameter profile of the roll, on account of the deformability of the outer layer.

In a recommended procedure for implementing this embodiment, the outer layer consists of nickel-chrome and has a thickness of between 0.1 and 1 mm.

In an advantageous variant of the roll according to the invention, at least one duct is provided in the synthetic layer, substantially parallel to the axis of the roll, for the circulation of a pressurized conditioning fluid, and the roll includes means for the entry and exit of the fluid, enabling the duct to be connected to an external unit for conditioning the fluid in temperature and pressure.

In this variant, the layer made of synthetic material should have sufficient thickness so as to be able to provide at least one duct therein. It preferably has a thickness of at least 5, advantageously 10 mm. The maximum thickness depends on the diameter of the roll. For rolls having an external diameter of between 20 and 100 cm, it is recommended that the thickness of the central layer does not exceed a quarter of the external diameter of the roll.

It is recommended that the inlet and outlet means are incorporated in the means for attaching the roll to the frame supporting the roll.

In many cases, it is preferable to provide several ducts, advantageously distributed in a uniform manner over the circumference of the intermediate layer. It is recommended that the number of ducts is at least 10.

The fluid is advantageously a liquid, such as for example water, optionally with the addition of additives that enable it to be cooled below 0°C without freezing. The fluid circulating in the duct or ducts therefore possesses a temperature and pressure that can be controlled continuously by regulating the external unit. The temperature of the fluid is advantageously below the surface temperature that it is desired to maintain at the surface of the roll while the plastic is being processed. Circulation of such a fluid enables the temperature of the synthetic material to be controlled, while preventing overheating during processing. It has been observed that such control improves adhesion between the synthetic intermediate layer and the outer layer on the one hand and, on the other hand, between the synthetic intermediate layer and the central layer of the roll. Moreover, controlling the temperature of the synthetic material reduces the risks of expansion due to heating, which modifies the external diameter of the roll in an uncontrolled manner. When the roll according to the invention is used for processing plastics, a contact area is obtained in this way between the film and the cylinder that may be greater and better controlled.

In this variant, the ducts are suitable for the circulation of a pressurized fluid through an external unit. A pressurized fluid is understood to be a fluid that has, on entering the duct or ducts, a pressure that is at least sufficient to overcome the pressure loss created by its circulation in the duct. The ducts are advantageously made by introducing flexible tube segments, for example made of silicone elastomer, into cylindrical orifices provided in the intermediate layer. The external unit, which is typically a refrigerating unit, is provided with a pressurizing device such as for example a circulating pump. The circulation flow rate should be sufficient to ensure good thermal conditioning of the intermediate layer. It is recommended that the flow rate is such that the temperature difference between the conditioning fluid entering and the conditioning fluid leaving the roll is less than 10°C, advantageously 5°C, preferably 2°C and more preferably 1°C. However, when the roll is in operation, the pressure of the conditioning fluid entering the roll is advantageously greater than 200 kPa. It is recommended that it does not exceed 3000 kPa, the preferred values ranging from 300 to 2000 kPa. On account of the high pressurization of the fluid, markedly greater than that necessary for circulating the fluid, the duct or ducts expand, putting the intermediate layer into compression, which ensures good contact of this with the outer and central layers. If the fluid is sufficiently pressurized, it is even possible for compression of the intermediate layer to be responsible alone for contact between the intermediate layer and the outer layer, in the sense that when the fluid is no longer pressurized, it is possible to remove the outer later by sliding. The outer layer can then be changed easily.

In a preferred embodiment of this variant, the synthetic layer having at least one duct is covered with a protective layer made of synthetic material having a hardness greater than that of the intermediate layer. This protective layer advantageously possesses a Shore A hardness greater than 50, preferably 60. It is recommended that its hardness does not exceed 100, preferably 90, values between 60 and 80 being more preferred. This protective layer corrects for any surface unevenness that could be created by the presence of at least one duct in the synthetic layer.

The central layer of the roll according to the invention is designed to provide it with good rolling properties. It includes means for attachment in rotation to a frame. These means include a spindle or segments of spindles or furthermore means of attachment to a spindle or spindle segment. The central layer is advantageously made at least partly at the start with metals having good wear resistance such as normal steels. In the variant according to which at least one duct is provided in the synthetic layer, the central layer advantageously includes part of the means for the entry and exit of conditioning fluid, so as to convey the latter from the duct or ducts to the outside of the roll, preferably via the means for attaching the cylinder to the frame in such a way that it can rotate.

The roll according to the invention may be suitable for any application requiring pressing flat surfaces by means of a roll machined in a very precise manner. It is particularly well suited for processing plastics requiring a pressing step using at least one roll. It is particularly suitable for calendering or extrusion-quenching processes. In these methods, the plastic is pressed between at least two rolls, at least one of which is advantageously according to the invention. The roll is particularly suitable for extrusion-quench cooling, which comprises the extrusion of a sheet of plastic by means of a flat die, the sheet being drawn at the outlet from the die and then cooled and rapidly reduced in thickness by being pressed between a roll according to the invention and a conventional cold metal roll. In these applications, the roll possesses typically but non-limitingly, a diameter of 150 to 400 mm, preferably 200 to 300 mm, and a length varying from 50 to 300 cm, preferably from 100 to 250 cm. In this statement, a sheet is understood to mean any flat product having a width of at least 10 times, preferably 100 times, greater than its thickness. A film is understood to mean a sheet having a thickness less than 1 millimetre. The roll according to the invention is especially suitable for processing films having a thickness less than 200µ, preferably 100µ. Such films also advantageously have a width greater than 1 metre.

The plastics may be thermosets or thermoplastics. They are advantageously thermoplastics. A thermoplastic is understood to mean a material that becomes fluid when it is heated sufficiently, the change in fluidity being reversible when it is cooled. Polyolefins, polyamides and polyvinyl chloride (PVC) are preferred. The roll according to the invention is particularly suitable for processing PVC and polypropylene. Polypropylene is preferred.

Consequently, the invention also relates to a method for processing a plastic film according to which the film is pressed between a rigid surface and a roll according to the invention.

According to a recommended variant of the method according to the invention, at least one duct is provided in the synthetic layer, substantially parallel to the axis of the roll, and fluid circulates therein, the fluid being conditioned in pressure and temperature by an external unit connected to the duct via inlet and outlet means provided in the roll.

The rigid surface is advantageously a second roll that preferably possesses a metal surface and is preferably also according to the invention.

In an advantageous means of implementing the method according to the invention, the conditioning fluid is pressurized to a value of between 300 and 2000 kPa.

It has been observed that when the roll has an outer layer made of rigid material, it enables the surface finish of the outer layer to be transferred very effectively to the film produced. When the outer layer is polished and the roll is pressed against a conventional roll that is also polished, it is possible to obtain a film possessing two shiny faces. When the two rolls are embossed, that is to say possessing an embossed surface finish, this surface finish can also be transferred in a single step to both faces of the film

Consequently, the invention also concerns a method for embossing both faces of a film according to which film is pressed between two rolls having an embossed surface finish, at least one of the rolls being according to the invention. When at least one of the rolls is according to the invention, a contact surface is obtained between the film and the cylinders which is controlled and sufficient to bring about the transfer of the surface finish, which was impossible with known rolls. On account of this, it is possible simultaneously to emboss both faces of the film, which considerably simplifies known methods requiring two steps.

The quality of this contact surface enables thin films to be processed, in particular rolled, without the appearance of a bead. By using known rolls, it is in point of fact necessary to exert a higher local pressure on the films in order to reduce their thickness by rolling, which brings about the appearance of a bead, that is to say an accumulation of rotating molten plastic upstream from the roll. The presence of such beads excludes the processing of multilayer films. Consequently, in an advantageous variant of the method according to the invention, the film is a multilayer film. Such a film may be produced by coating or coextrusion.

Finally, excellent control over the outer diameter of the roll according to the invention makes it possible to process films possessing special optical effects, by giving slightly different peripheral speeds to the two rolls between which the film is pressed.

Features and details of the invention will become apparent from the appended figures.

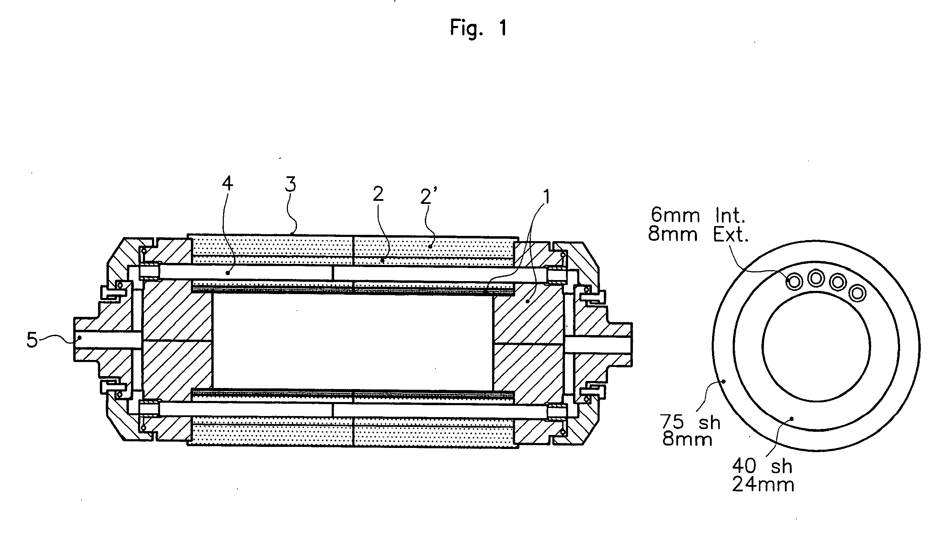

Figure 1 shows a roll according to a particular embodiment of the invention. The central layer (1), the intermediate layer made of synthetic material (2), the protective layer (2'), the outer layer (3), the ducts (4) and the means of the entry and exit of conditioning fluid (5) are shown here.

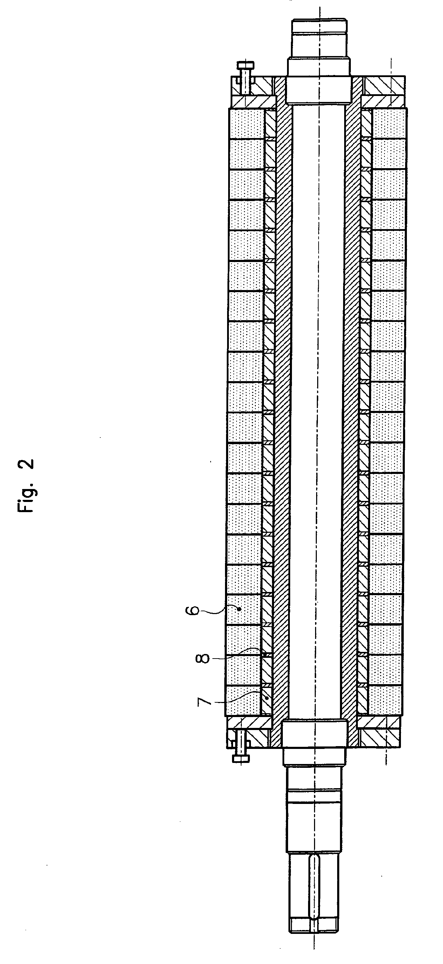

Figure 2 illustrates the roll according to the invention. It illustrates the sections (6), the main rings (7) and the secondary rings (8).

## Claims

1. Roll having an adjustable-diameter profile, comprising a central layer surrounded by a layer of flexible synthetic material made up of the juxtaposition of annular sections (6), each section surrounding a main rigid ring (7) possessing a thickness less than that of the section, at least one thin secondary rigid ring (8) being bonded to a main ring.

2. Roll according to the preceding claim, **characterized in that** at least one duct (4) is provided in the intermediate layer (2), substantially parallel to the axis of the roll, for the circulation of a pressurized conditioning fluid and **in that** the roll includes means for the entry and exit (5) of the fluid, enabling the duct to be connected to an external unit for conditioning the fluid in temperature and pressure.

3. Roll according to the preceding claim, **characterized in that** the synthetic material possesses a Shore A hardness between 40 and 60.

4. Roll according to any one of the preceding claims, **characterized in that** the intermediate layer (2) having at least one duct (4) is covered with a protective layer (2') made of synthetic material having a hardness greater than that of the intermediate layer.

5. Roll according to any one of the preceding claims, having an outer layer made of rigid material possessing a modulus of elasticity greater than 10 GPa.

6. Method for processing a plastic film according to which the film is pressed between two rolls, at least one roll being in accordance with any one of Claims 1 to 5.

7. Method according to the preceding claim, in which at least one duct is provided in the synthetic layer, substantially parallel to the axis of the roll and a fluid circulates therein, the fluid being conditioned in terms of pressure and temperature by an external unit connected to the duct via inlet and outlet means provided in the roll.

8. Method according to the preceding claim, in which the fluid is conditioned to a pressure of 300 to 2000 kPa.

9. Method according to any one of Claims 6 to 8, in which the two rolls rotate at a different peripheral speed so as to confer optical effects on the film.

10. Method for embossing the two faces of a film, according to which a film is pressed between two rolls having an embossed surface finish, at least one of the rolls being in accordance with Claim 5.

## Patentansprüche

1. Rolle mit einem regelbaren Durchmesserprofil, umfassend eine zentrale Schicht umgeben von einer Schicht aus flexiblem, synthetischem Material, hergestellt durch Aneinanderreihung von ringförmigen Abschnitten (6), wobei jeder Abschnitt einen starren Hauptring (7) umgibt, der eine kleinere Dicke als diejenige dieses Abschnitts aufweist, und wobei zumindest ein dünner Sekundärring (8) mit dem Hauptring verbunden ist.

2. Rolle gemäß dem vorhergehenden Anspruch, **dadurch gekennzeichnet, dass** zumindest ein Kanal (4) für die Zirkulation einer unter Druck stehenden Konditionierflüssigkeit im wesentlichen parallel zu der Hauptachse der Rolle in der Zwischenschicht (2) vorhanden ist und wobei die Rolle Vorrichtungen für den Eintritt und Austritt (5) der Flüssigkeit aufweist, die ein Anschließen des Kanals an eine externe Einheit zur Konditionierung der Flüssigkeit in Bezug auf Temperatur und Druck ermöglichen.

3. Rolle gemäß dem vorhergehenden Anspruch, **dadurch gekennzeichnet, dass** das synthetische Material eine Shore A Härte zwischen 40 und 60 aufweist.

4. Rolle gemäß einem der vorhergehenden Ansprüche, **dadurch gekennzeichnet, dass** die Zwischenschicht (2) zumindest einen Kanal (4) aufweist, der mit einer Schutzschicht (2') aus einem synthetischen Material mit einer größeren Härte als die der Zwischenschicht versehen ist.

5. Rolle gemäß einem der vorhergehenden Ansprüche mit einer äußeren Schicht aus einem starren Material, welches ein Elastizitätsmodul größer als 10 GPa aufweist.

6. Verfahren zur Verarbeitung einer Kunststofffolie gemäß dem die Folie zwischen zwei Rollen gepresst wird, wobei zumindest eine Rolle gemäß einem der Ansprüche 1 bis 5 ausgebildet ist.

7. Verfahren gemäß dem vorhergehenden Anspruch, bei welchem zumindest ein zu der Achse der Rolle im wesentlichen paralleler Kanal in der synthetischen Schicht vorhanden ist, in welchem eine Flüssigkeit zirkuliert, wobei die Flüssigkeit in Bezug auf Druck und Temperatur durch eine externe Einheit, die über an der Rolle bereitgestellte Eintritts- und Austrittsmittel mit dem Kanal verbunden ist, konditioniert wird.

8. Verfahren gemäß dem vorhergehenden Anspruch, wobei die Flüssigkeit auf einen Druck von 300 bis 2000 kPa konditioniert ist.

9. Verfahren gemäß einem der Ansprüche 6 bis 8, wobei die beiden Rollen mit verschiedener Umfangsgeschwindigkeit rotieren, so dass der Folie optische Effekte verliehen werden.

10. Verfahren zur Prägung der beiden Seiten einer Folie gemäß dem eine Folie zwischen zwei Rollen mit einer geprägten Oberflächenausführung gepresst wird, wobei zumindest eine Rolle gemäß Anspruch 5 ausgebildet ist.

## Revendications

1. Rouleau ayant un profil de diamètres réglable comprenant une couche centrale entourée d'une couche en matière synthétique souple constituée de la juxtaposition de tranches annulaires (6), chaque tranche entourant un anneau rigide principal (7) possédant une épaisseur inférieure à celle de la tranche, au moins un anneau rigide secondaire mince (8) étant accolé à un anneau principal.

2. Rouleau selon la revendication précédente **caractérisé en ce que** au moins un conduit (4) est ménagé dans la couche intermédiaire (2), substantiellement parallèlement à l'axe du rouleau, pour la circulation d'un fluide de conditionnement pressurisé et **en ce que** le rouleau comprend des moyens d'entrée et de sortie (5) du fluide, permettant la connexion du conduit à une unité extérieure de conditionnement du fluide en température et pression.

3. Rouleau selon la revendication précédente, **caractérisé en ce que** la matière synthétique possède une dureté Shore A comprise entre 40 et 60.

4. Rouleau selon l'une quelconque des revendications précédentes **caractérisé en ce que** la couche intermédiaire (2) comprenant au moins un conduit (4) est recouverte d'une couche de protection (2') en matière synthétique ayant une dureté supérieure à celle de la couche intermédiaire.

5. Rouleau selon l'une quelconque des revendications précédentes comprenant une couche extérieure en matière rigide possédant un module d'élasticité supérieur à 10 GPa.

6. Procédé de mise en oeuvre de film en matière plastique selon lequel le film est pressé entre deux rouleaux, au moins un rouleau étant conforme à l'une quelconque des revendications 1 à 5.

7. Procédé selon la revendication précédente, dans lequel au moins un conduit est ménagé dans la couche synthétique, substantiellement parallèlement à l'axe du rouleau, et un fluide y circule, le fluide étant conditionné en pression et température par une unité extérieure connectée au conduit via des moyens d'entrée et de sortie ménagés dans le rouleau.

8. Procédé selon la revendication précédente, dans lequel le fluide est conditionné à une pression valant de 300 à 2000 kPa.

9. Procédé selon l'une quelconque des revendications 6 à 8, dans lequel les deux rouleaux tournent à une vitesse périphérique différente, de manière à 5 conférer des effets optiques au film.

10. Procédé de grainage des deux faces d'un film, selon lequel un film est pressé entre deux rouleaux présentant un état de surface granuleux, au moins un des rouleaux étant conforme à la revendication 5.
